Europäisches Patentamt

European Patent Office

Office européen des brevets

(19)

(11) Veröffentlichungsnummer : **0 166 200**
**B1**

(12) **EUROPÄISCHE PATENTSCHRIFT**

(45) Veröffentlichungstag der Patentschrift :
20.01.88

(21) Anmeldenummer : 85106244.8

(22) Anmeldetag : 22.05.85

(51) Int. Cl.⁴ : **B 01 J   2/20**

(54) **Vorrichtung zur Herstellung von Granulat.**

(30) Priorität : 09.06.84 DE 3421625

(43) Veröffentlichungstag der Anmeldung :
02.01.86 Patentblatt 86/01

(45) Bekanntmachung des Hinweises auf die Patenterteilung : 20.01.88 Patentblatt 88/03

(84) Benannte Vertragsstaaten :
BE DE FR GB IT NL

(56) Entgegenhaltungen :
CH-A-   250 968
CH-A-   258 834

(73) Patentinhaber : Santrade Ltd.
Alpenquai 12 P.O. Box 321
CH-6002 Luzern (CH)

(72) Erfinder : Froeschke, Reinhard
Pestalozzistrasse 7
D-7056 Weinstadt 2 (DE)

(74) Vertreter : Wilhelm, Hans-Herbert, Dr.-Ing. et al
Wilhelm & Dauster Patentanwälte Hospitalstrasse 8
D-7000 Stuttgart 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Herstellung von Granulat aus fließfähigen Medien, die aus einem zylindrischen, drehbaren Behälter mit horizontaler Achse durch auf dessen Umfang verteilt angeordneten Durchtrittsöffnungen in Tropfenform austreten und auf eine darunter befindliche, quer zur Behälterachse bewegte Kühl- und Transporteinrichtung fallen, um dort zu erstarren oder zu gelieren, wobei der Austritt durch eine innerhalb des Behälters und in ihrer Relativlage zur Behälterwandung ortsfest angeordnete Anlaufeinrichtung bewirkt wird.

Vorrichtungen dieser Art sind bekannt (DE-B 12 870 45 und 17 673 81). Bei diesen bekannten Bauarten sind innerhalb des Behälters Anpressrollen bzw. Anpresswalzen mit paralleler Achse zur Behälterachse vorgesehen, die mit ihrem Umfang an der Innenwand des Behälters abrollen. Durch diese beiden diametral gegenüberliegenden Walzen kann bei der Verarbeitung von Zuckerbrei oder bei der Erzeugung von Futtermitteln erreicht werden, daß die im Inneren des Behälters befindliche zähe Masse zwischen den Anpresswalzen und dem drehbaren Behälter durch dessen Öffnungen herausgedrückt wird, wo sie dann durch außen am Behälter anliegende Messer in Granulatstränge geeigneter Länge zerlegt wird.

Vorrichtungen dieser Art weisen neben dem Nachteil, daß Verschleiß an den abrollenden Teilen auftritt, auch den Nachteil auf, daß sie nicht zur Bildung von Granulat aus sehr leicht fließfähigen Materialien eingesetzt werden, das in Tropfenform austreten würde.

Bekannt ist aber auch eine Einrichtung (DE-G 28 53 054), bei der zwei ineinander gelagerte mit ihren Wandungen aneinanderliegende zylindrische Behälter relativ zueinander drehbar sind, wobei nur einer der Behälter auf dem Umfang verteilte Durchtrittsöffnungen aufweist und der andere nur mit Öffnungen versehen ist, die einem darunter-liegenden Kühlband zugewandt sind. Bei diesen Bauarten kommen daher die Öffnungen des einen Behälters bei der Relativdrehung der beiden Behälter zyklisch mit den Öffnungen des anderen Behälters zur Deckung, so daß dadurch auch leicht fließfähige Massen in Tropfenform austreten und auf einem darunter vorbeibewegten Kühlband erstarren können. Da bei diesen Bauarten der gesamte Innenraum des inneren Behälters mit der zu granulierenden Masse ausgefüllt ist, ist eine Dosierung der austretenden Tropfen, insbesondere bei sehr dünnflüssigen Massen, nur sehr schwierig möglich.

Zur Herstellung flacher Gebilde aus teigartigen Massen, insbesondere Schokolade, ist es auch bekannt (CH-A 258 834) am Umfang einer rotierenden Trommel Ausnehmungen in der Form der herzustellenden Gebilde vorzusehen und die Masse aus dem unteren Bereich der Trommel durch einen Stauschaber heraus und auf ein an der Trommelaußenseite geführtes Band zu drücken. Dieses Band löst sich später von der Trommelaußenseite und nimmt die, der Dicke der Trommelwandung und der Form der Ausnehmungen entsprechenden Gebilde mit. Zum Granulieren dünnflüssiger Massen ist die bekannte Vorrichtung nicht geeignet.

Der vorliegenden Erfindung liegt daher die Aufgabe zugrunde, Vorrichtungen der eingangs genannten Art so auszubilden, daß Medien mit sehr niederer, aber auch mit mittlerer Viskosität, vertropft und zu Granulat verarbeitet werden können.

Die Erfindung besteht bei einer Vorrichtung der eingangs genannten Art darin, daß die Anlaufeinrichtung aus einer an der unteren Hälfte der Behälterwandung anliegenden Stauwand besteht, die an ihrem oberen Ende in eine schräg zur Horizontalen ansteigende und den in Drehrichtung des Behälters hinter der Stauwand liegenden Bereich überdeckende Auffangwand übergeht, und daß die Zufuhr des Mediums in den Behälter im Bereich oberhalb der Auffangwand erfolgt.

Diese Ausgestaltung weist den Vorteil auf, daß nur der oberhalb der Auffangwand und vor der Stauwand liegende Raum innerhalb des Behälters mit dem zu vertropfenden Medium gefüllt werden kann, so daß sich beispielsweise die Möglichkeit bietet, das Vertropfen ausschließlich unter Einwirkung des statischen Druckes des sich vor der Stauwand anstauenden Mediums durchzuführen. Es ist aber auch möglich, das Medium über die Auffangwand in der Art eines Überlaufwehres zu führen, vor der Stauwand anzustauen und es mit Hilfe der Stauwand durch die Öffnungen auszupressen, wenn die Stauwand unter einem spitzen Winkel zu einer im Schnittpunkt der Stauwand mit der Behälterwand an die Behälterwandung gelegten Tangente steht. Die neue Ausführung bietet daher weit mehr Variationsmöglichkeiten und Anpassungsmöglichkeiten an das zu vertropfende Medium, als dies beim Stand der Technik vorgesehen war. Die Auffangwand kann eine ebene Platte mit einer Breite sein, die kleiner als der Radius des Behälters ist. Diese Ausführung empfiehlt sich, wenn nur aufgrund der Höhe des sich vor der Stauwand anstauenden Mediums vertropft werden soll. Die Auffangwand kann aber auch eine Platte sein, die breiter als der Radius des Behälters und die obere Begrenzung eines in der Behälterachse schwenkbar gelagerten Körpers ist, an dem auch die Stauwand angebracht wird. Diese Ausführung läßt größere Variationsmöglichkeiten zu, weil hier zum einen die Schräge der Auffangwand einstellbar ist und weil hier das in den Öffnungen des Behälters noch vorhandene Restmaterial, das bei der Weiterdrehung des Behälters ins Innere zurückgetropft, stets wieder dazu gezwungen wird, in den Bereich vor der Stauwand zu gelangen. Die Auffangwand trennt hier auch einen größeren Behälterbereich nach oben ab und ermöglicht so die Zuführung des zu vertropfenden Mediums, auch in einem Bereich, der unter Umständen deutlich vor dem untersten Umfangspunktes des Behälters, der den kürzesten Abstand zur Kühleinrichtung hat, zu liegen kommt. Der Vorgang der Tropfenbildung läßt sich dadurch weitgehend beeinflussen und es hat sich gezeigt, daß die neue Einrichtung mit sehr hohen Umdrehungsgeschwindigkeiten des Behälters arbeiten kann und daher auch eine hohe Kapazität aufweist.

Der schwenkbar gelagerte Körper im Behälter kann vorteilhaft als ein Hohlkörper ausgebildet sein, in dem Beheizungseinrichtungen zum Aufheizen der Auffangwand angeordnet sind. So kann der Körper vorteilhaft beispielsweise als quaderförmiger Hohlkörper mit dreieckförmigem Querschnitt ausgebildet sein, so daß die Auffangwand in eine die Stauwand bildende oder dieser vorgelagerte Ablaufwand übergeht, welche eine Seite des Quaders bilden kann. Es ist aber auch möglich, die Stauwand verstellbar an dem Körper zu lagern, was beispielsweise dadurch geschehen kann, daß sie an seitlich von dem Körper liegenden Befestigungsarmen geführt ist, die von außerhalb des Behälters schwenkbar sind. Dadurch läßt sich die Stauwand in ihrem Winkel gegenüber der Auffangwand verstellen, so daß, wie eingangs bereits erwähnt, diese auch in der Art eines Eindrückspachtels wirken kann, um beispielsweise Medien mit mittleren Viskositäten zusätzlich zur Wirkung der Schwerkraft auch noch mechanisch durch die Öffnungen nach unten herauszudrücken.

Die Anwendungsbreite der neuen Vorrichtung ist daher sehr groß.

Als Kühleinrichtung wird vorteilhaft ein senkrecht zu der Achse des Behälters bewegtes Kühlband vorgesehen. Die Zufuhr der fließfähigen Medien erfolgt vorzugsweise, mit erhöhter Temperatur über ein parallel zur Behälterachse verlaufendes beheiztes Rohr, das mit nach unten gerichteten Austrittsöffnungen versehen ist, so daß je nach Druck in dem Rohr eine kleinere oder größere Menge in den Behälter geleitet werden kann. Das Rohr kann dabei oberhalb der Auffangwand angeordnet sein, so daß das zugeführte Medium zunächst etwa horizontal über die Auffangwand und erst dann nach unten zur Stauwand geführt wird. Da in diesem Bereich eine Aufheizung erfolgen kann, läßt sich die Viskosität des zu vertropfenden Mediums bis kurz vor dem Austrittsbereich sehr feinfühlig beeinflussen, so daß außer den Beeinflussungsmöglichkeiten durch die Stellung der Auffangwand und der Stauwand zur Behälterwand auch noch eine weitere Beeinflussungsmöglichkeit zur Tropfenbildung besteht. Schließlich kann der Behälter im Bereich seiner oberen Hälfte mit einer Beheizungshaube umgeben sein, die dafür sorgt, daß etwa noch in den Öffnungen enthaltenes Restmaterial in das Behälterinnere zurücktropft. Das Material wird dort über die Auffangwand wieder an die für den Vertropfungsvorgang vorgesehene Stelle geführt und kann keinen störenden Einfluß ausüben.

Die Erfindung ist in der Zeichnung anhand eines Ausführungsbeispiels dargestellt und wird im folgenden erläutert. Es zeigen:

Fig. 1 Die Draufsicht auf eine erfindungsgemäße Vorrichtung zur Herstellung von Granulat, teilweise im Schnitt,

Fig. 2 den Teilschnitt durch die Einrichtung der Fig. 1 längs der Linie II-II,

Fig. 3 die Ansicht der Vorrichtung der Fig. 1 in Richtung der Pfeile III-III,

Fig. 4 die Ansicht in Richtung der Pfeile IV-IV in vergrößertem Maßstab, und

Fig. 5 die vergrößerte Darstellung eines Details aus Fig 2.

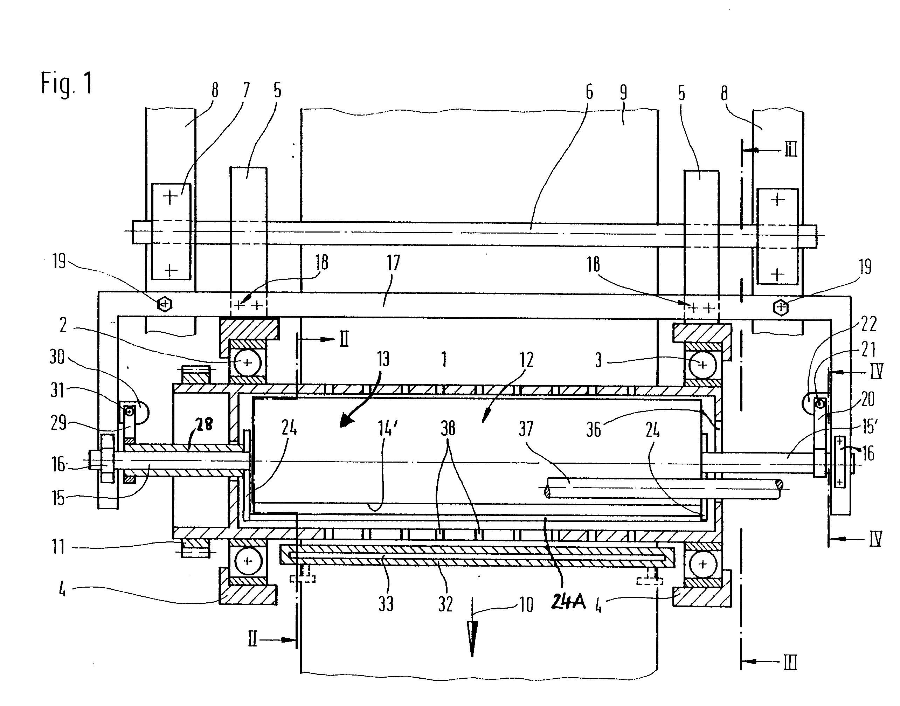

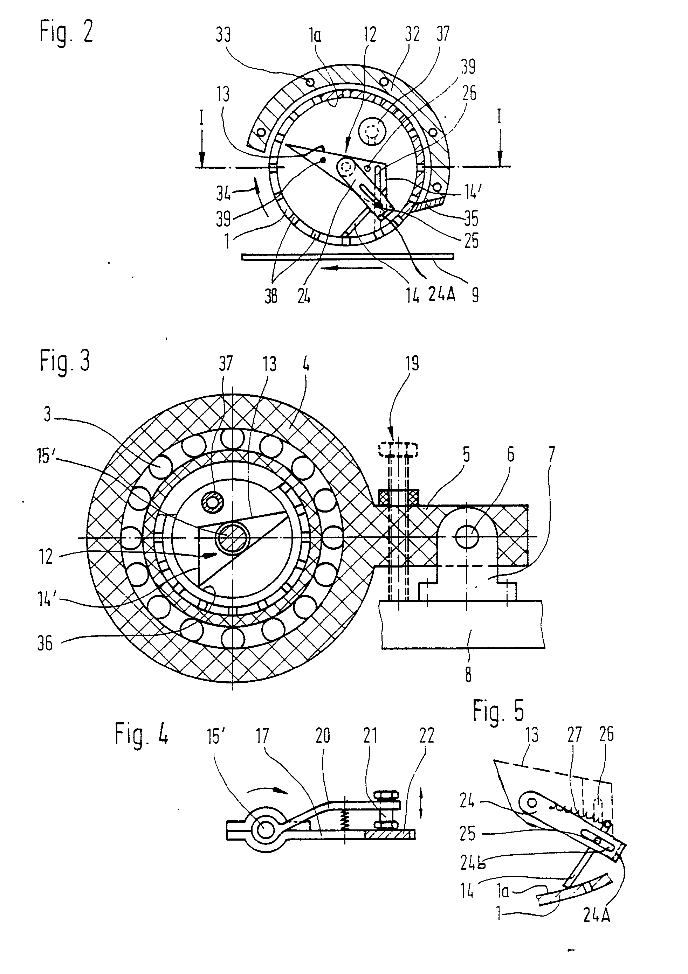

In der Fig. 1 und 2 ist ein zylindrischer Behälter 1 gezeigt, der drehbar in den Kugellagern 2 und 3 gehalten ist, welche in zweiteiligen Halteschalen 4 sitzen, die über je einen Befestigungsarm 5 ortsfest aber in gewissen Umfang verschwenkbar an einer Achse 6 gelagert sind. Die Achse 6 wird zu diesem Zweck in Lagerlaschen 7 gehalten, die fest mit Längsträgern 8 eines Gestelles verschraubt sind, das ortsfest angeordnet ist. Zwischen den Trägern 8 hindurchgeführt ist ein Kühlband 9, das in Richtung des Pfeiles 10 in nicht näher dargestellter Weise bewegt wird und beispielsweise von unten her mit Kühlsole besprüht wird. Der Behälter 1 wird über ein fest mit ihm verbundenes Zahnrad 11 in Drehung versetzt, das in nicht gezeigter Weise mit einem Antrieb in Verbindung steht. In dem Behälter ist ein Hohlkörper 12 angeordnet, der beim Ausführungsbeispiel die Form eines Quaders mit dreieckförmigen Querschnitt besitzt, dessen obere Seite eine Platte 13 bildet, die schräg zur Horizontalen verläuft und mit ihrem linken, aus Fig. 2 erkennbaren Ende nahe bis vor die innere Behälterwandung 1a reicht und in einem Bereich vor dieser endet, der etwa einen Winkel zwischen 0° und 45° mit der Horizontalen (Linie I-I) einschließt. Diese Platte bildet eine Auffangwand, deren Funktion noch erläutert werden wird. Sie geht an ihrem rechten Ende nach unten in eine Stauwand 14 über, der ein von der Platte 13 abknickender Wandteil 14' vorgelagert ist. Der Hohlkörper 12 ist an seinen beiden Seiten mit je einem Achsstummel 15 bzw. 15' fest verbunden, der außen in Lagern 16 jeweils schwenkbar gehalten ist. Diese Lager 16 sind auf einem Bügel 17 aufgeschraubt, der über den Befestigungsarmen 5 der Lager 2 und 3 verläuft und der aber an den Stellen 18 jeweils fest mit den Armen 5 verschraubt ist. Die Verstellung der Befestigungsarme 5 um die Achse 6 erfolgt durch Schrauben 19, die sich jeweils auf den Trägern 8 abstützen. Eine dieser Schrauben 19 ist in Fig. 3 schematisch angedeutet, um die Verstellfunktion zu verdeutlichen.

Der Achsstummel 15' für den Hohlkörper 12 ist drehfest mit einem Hebelarm 20 verbunden, der sich über eine Schraube 21 an einer Lasche 22 abstützt, die fest mit dem Bügel 17 verbunden ist. Über diesen Hebelarm 20 wird daher der Hohlkörper 12 verdrehfest gegenüber dem Behälter 1 gehalten. Er läßt sich jedoch durch Verstellung der Schraube 21 relativ zum Behälter 1 verschwenken.

An dem Hohlkörper 12 bzw. auf dessen Achsstummeln 15 und 15' sind jeweils schwenkbar seitlich Hebel 24 gelagert, die dazu dienen, die Stauwand 14 in ihrer Lage zum Behälter 1 verstellbar zu halten. Zu diesem Zweck sind die Befestigungshebel 24 über einen Querbügel 24A untereinander verbunden und jeweils mit Langlöchern 24b versehen, in die seitlich von der Stauwand 14 abstehende Zapfen 25 eingreifen, die aber auch in einem Längsschlitz 26 seitlich am Hohlkörper 12 geführt sind. Die Stauwand 14 steht mit ihrem von der Behälterinnenwandung 1a abgewandten Ende über die Zapfen 25 hinaus und ist dort an Zugfedern 27 angelenkt, die wiederum mit ihrem anderen Ende an den Befestigungshebeln 24 angebracht sind. Wie aus Fig. 5 erkennbar ist, wird auf diese Weise die Stauwand 14 stets mit ihrem unteren Ende fest an die Behälterinnenwandung 1a angedrückt. Ihre Relativlage zu der Behälterwandung bzw. der Winkel zwischen ihr und einer im Berührungspunkt an die Behälterinnenwandung 1a gelegten Tangente wird durch die Stellung des Befestigungshebels 24 bestimmt. Wird dieser aus der Lage der Fig. 5 im Gegenuhrzeigersinn verschwenkt, so nimmt die Stauwand 14 eine steilere Lage gegenüber der dargestellten ein. Wird der Hebel im Uhrzeigersinn verschwenkt, so wird der Winkel zwischen der Stauwand 14 und einer im vorher angedeuteten Sinn an die Behälterinnenwand 1a gelegten Tangente spitzer. Diese Verstellung des Befestigungshebels 24 wird dadurch erreicht, daß der in der Fig. 1 links angeordnete Befestigungshebel drehfest mit einer Hülse 28 verbunden ist, die ihrerseits wiederum drehfest mit einem Hebel 29 verbunden ist, der in der gleichen Weise wie der Hebel 20 des Achsstummels 15' über eine Einstellschraube 31 auf einer Lasche 30 abgestützt ist, die fest mit dem Bügel 17 in Verbindung steht.

Der Behälter 1 wird in seinem oberen Bereich von einer Beheizungshaube 32 überdeckt, die mit Strömungskanälen 33 für ein Heizmedium, beispielsweise Thermoöl oder mit elektrischen Heizstäben ausgerüstet ist. An ihrem in der Drehrichtung 34 hinteren Ende ist ein Eindrückspachtel 35 angeordnet, der etwa noch außen am Behälter 1 anhändendes Material in die am Spachtel 35 vorbeistreichende Öffnung zurückdrückt.

Das zu vertropfende Material wird dem Behälterinneren durch eine stirnseitige Öffnung 36 des Behälters 1 von außen über ein Rohr 37 zugeführt, das nach unten zur Auffangwand hin gerichtete Ausflußöffnungen aufweist.

Diese neue Vorrichtung arbeitet wie folgt :

Durch das Rohr 37 wird dem Inneren des Behälters 1 ein zu vertropfendes Material im fließfähigem Zustand, vorzugsweise mit erhöhter Temperatur zugeführt. Das Medium tritt durch die nach unten gerichteten Öffnungen aus und strömt streifenförmig von der Auffangplatte 13 aus über die Kante zwischen Auffangplatte 13 und der nach unten ragenden Wand 14' nach unten. Es gelangt dann in den Bereich zwischen Behälterinnenwandung 1a und Stauwand 14 und wird dort je nach Lage der Stauwand 14 durch die vorbeirotierenden Öffnungen 38 des Behälters 1 entweder nach außen gedrückt oder es fließt bei niedrigviskosen Medien aufgrund seiner Schwerkraft und des vor der Stauwand 14 aufgebauten statischen Druckes durch die Öffnungen 38 durch. Von dort aus fällt es in Tropfenform auf das darunter bewegte Kühlband 9 und kann in Tropfenform erstarren oder gelieren. Nätürlich wäre es auch möglich, anstelle des Bandes 9 ein darunter hinwegbewegtes strömendes Medium in einem Kanal, beispielsweise Wasser, als Kühleinrichtung vorzusehen, wenn dies im Einzelfall möglich ist.

Restmaterial in den Öffnungen 38 wird bei der Drehung des Behälters 1 in Richtung 34 mit nach oben gefördert, dort durch die Einwirkung der Beheizungshaube 32, wieder bis zum Fließpunkt erweicht und tropft dann in das Behälterinnere herein, wenn sich die Öffnungen in der oberen Hälfte des Behälters 1 vorbeidrehen. Das Material fällt dann auf die zu diesem Zweck vorgesehene Auffangwand 13 und wird mit dem durch das Rohr 37 zugeführten Material wieder in den Bereich vor die Stauwand geleitet.

Um den Rückfluß zu erleichtern und um auch noch eine Beeinflussungsmöglichkeit für die Tropfenbildung durch Beeinflussung der Viskosität zu erhalten, kann der Hohlkörper 12 in seinem Inneren ebenfalls mit einer Heizeinrichtung, beispielsweise mit Rohren 39 für den Durchfluß von Thermoöl, aber auch mit Elektroheizstäben o. dgl. versehen sein, die eine Aufheizung und Temperierung der Auffangplatte 13 und der Abströmwand 14' erlauben.

**Patentansprüche**

1. Vorrichtung zur Herstellung von Granulat aus fließfähigen Medien, die aus einem zylindrischen, drehbaren Behälter mit horizontaler Achse durch auf dessen Umfang verteilt angeordnete Durchtrittsöffnungen in Tropfenform austreten und auf eine darunter befindliche, quer zur Behälterachse bewegte Kühl- und Transporteinrichtung fallen, um dort zu erstarren oder zu gelieren, wobei der Austritt durch eine innerhalb des Behälters und in ihrer Relativlage zur Behälterwandung ortsfest angeordnete Anlaufeinrichtung bewirkt wird, dadurch gekennzeichnet, daß die Anlaufeinrichtung aus einer an der unteren Hälfte der Behälterwandung (1a) anliegenden Stauwand (14) besteht, die an ihrem oberen Ende in eine schräg zur Horizontalen (I-I) ansteigende und den in Drehrichtung (34) des Behälters (1) hinter der Stauwand liegenden Bereich überdeckende Auffangwand (13) übergeht und daß die Zufuhr des Mediums in den Behälter im Bereich oberhalb der Auffangwand erfolgt.

2. Vorrichtung nach Anspruch 1, dadurch gekennzeichnet, daß die Stauwand (14) unter einem spitzen Winkel zu einer im Schnittpunkt einer gedachten Verlängerung der Stauwand an die Behälterwandung (1a) gelegten Tangente steht.

3. Vorrichtung nach Anspruch 1, dadurch gekennzeichnet, daß die Auffangwand (13) eine ebene Platte mit einer Breite ist, die kleiner als der Radius des Behälters (1a) ist.

4. Vorrichtung nach den Ansprüchen 1 bis 2, dadurch gekennzeichnet, daß die Auffangwand (13) breiter als der Radius des Behälters (1) und die obere Begrenzung eines in der Behälterachse (15, 15') schwenkbar gelagerten Körpers (12) ist, an dem auch die Stauwand (14) angebracht ist.

5. Vorrichtung nach Anspruch 4, dadurch gekennzeichnet, daß der Körper (12) ein Hohlkörper ist, in dem Beheizungseinrichtungen (39) zum Aufheizen der Auffangwand (13) angeordnet sind.

6. Vorrichtung nach Anspruch 4, dadurch gekennzeichnet, daß der Körper (12) als ein quaderförmiger Hohlkörper mit dreieckförmigem Querschnitt ausgebildet ist und daß die Auffangwand (13) in eine die Stauwand (14) bildende oder dieser vorgelagerten Ablaufwand (14') übergeht, welche eine Seite des Quaders bildet.

7. Vorrichtung nach Anspruch 4, dadurch gekennzeichnet, daß die Stauwand (14) verstellbar an dem Körper (12) gelagert ist.

8. Vorrichtung nach Anspruch 7, dadurch gekennzeichnet, daß die Stauwand (14) an seitlich von dem Körper (12) liegenden Befestigungsarmen (24) geführt ist, die von außerhalb des Behälters (1) schwenkbar sind.

9. Vorrichtung nach Anspruch 8, dadurch gekennzeichnet, daß die Befestigungsarme (24) an Büchsen (28) befestigt sind, die schwenkbar auf der Achse (15) des Behälters (1) angeordnet sind.

10. Vorrichtung nach Anspruch 1, dadurch gekennzeichnet, daß als Kühleinrichtung ein senkrecht zu der Achse (15, 15') des Behälters (1) bewegtes Kühlband (9) vorgesehen ist.

11. Vorrichtung nach Anspruch 1, dadurch gekennzeichnet, daß die Zufuhr der fließfähigen Medien, vorzugsweise mit erhöhter Temperatur, über ein parallel zur Behälterachse (15, 15') verlaufendes beheizbares Rohr (37) erfolgt, das mit nach unten gerichteten Austrittsöffnungen versehen ist.

12. Vorrichtung nach Anspruch 11, dadurch gekennzeichnet, daß das Rohr (37) oberhalb der Auffangwand (13) angeordnet ist.

13. Vorrichtung nach Anspruch 1, dadurch gekennzeichnet, daß der Behälter (1) im Bereich seiner oberen Hälfte mit einer Beheizungshaube (32) umgeben ist.

14. Vorrichtung nach Anspruch 1, dadurch gekennzeichnet, daß in dem in Drehrichtung (34) vor der Stauwand (14) liegenden Umfangsbereich des Behälters (1) ein Eindrückspachtel (35) vorgesehen ist, der außen am Behälter und in dessen Längsrichtung anliegt.

15. Vorrichtung nach Anspruch 13 und 14, dadurch gekennzeichnet, daß der Eindrückspachtel (35) am in Drehrichtung (34) unteren Ende der Beheizungshaube (32) angebracht ist.

16. Vorrichtung nach Anspruch 1 bis 15, dadurch gekennzeichnet, daß der Körper (12) und die Stauwand (14) auswechselbar im Behälter (1) gehalten sind.

**Claims**

1. Apparatus for the production of granules from media which are capable of flowing, which flow out in the form of drops from a cylindrical, rotatable container with a horizontal axis through outlet openings distributed on its periphery and which fall onto a cooling and conveying unit located below which moves at right angles to the container axis so as to solidify or gel there, whereby the outflow is effected by an initiating device arranged inside the container, so that it is stationary in its relative position to the container wall, characterised in that the initiating device consists of a retaining wall (14) which is adjacent to the lower half of the container wall (1a) and which at its upper end passes into a trapping wall (13) which rises obliquely to the horizontal (I-I) and which covers the area located in the direction of rotation (34) of the container (1) behind the retaining wall and in that the medium is fed into the container in the area above the trapping wall.

2. Apparatus according to claim 1, characterised in that the retaining wall (14) is located at a pointed angle in relation to a tangent placed at the point of intersection of an imaginary extension of the retaining wall to the container wall (1a).

3. Apparatus according to claim 1, characterised in that the trapping wall (13) consists of a flat plate having a width which is smaller than the radius of the container (la).

4. Apparatus according to claims 1 to 2, characterised in that the trapping wall (13) is wider than the radius of the container (1) and constitutes the upper limit of a component (12) which is mounted so that it can be swivelled in the container axis (15, 15') and to which the retaining wall (14) is also fitted.

5. Apparatus according to claim 4, characterised in that the component consists of a hollow component (12), in which heating devices (39) are arranged for heating the trapping wall (13).

6. Apparatus according to claim 4, characterised in that the component (12) is constructed as a cuboid-shaped hollow component of triangular cross section and that the trapping wall (13) runs into an outflow wall (14') which forms the retaining wall (14) or which is located in front of it and which forms a side of the cuboid.

7. Apparatus according to claim 4, characterised in that the retaining wall (14) is mounted so that it can be adjusted at the component (12).

8. Apparatus according to claim 7, characterised in that the retaining wall (14) extends at mounting arms (24) which are located to the side of the component (12) and which can be swivelled from outside the container (1).

9. Apparatus according to claim 8, characterised in that the mounting arms (24) are secured in bushings (28) which are arranged so that they can be swivelled on the axis (15) of the container (1).

10. Apparatus according to claim 1, characterised in that a cooling belt (9) which is moved at right angles to the axis (15, 15') of the container (1) is provided as a cooling device.

11. Apparatus according to claim 1, characterised in that the media which is capable of flowing, are supplied for preference at an increased temperature through a pipe (37) which can be heated running parallel with the container axis (15, 15') and which is provided with outlet openings which are directed downwards.

12. Apparatus according to claim 11, characterised in that the pipe (37) is arranged above the trapping wall (13).

13. Apparatus according to claim 1, characterised in that the container (1) is surrounded by a heating hood (32) in the area of its upper half.

14. Apparatus according to claim 1, characterised in that an impression piece (35) which rests against the container on the outside in its longitudinal direction is provided in the circumferential area of the container (1) located in the direction of rotation (34) in front of the retaining wall (14).

15. Apparatus according to claims 13 and 14, characterised in that the impression piece (35) is fitted at the lower end of the heating hood (32) in the direction of rotation (34).

16. Apparatus according to claims 1 to 15, characterised in that the component (12) and the retaining wall (14) are held interchangeably in the container (1).

## Revendications

1. Appareillage pour la fabrication d'un granulat à partir de matières fluides, qui sortent sous forme de gouttes d'un récipient cylindrique rotatif à axe horizontal en passant par des orifices de décharge répartis sur sa périphérie, et qui tombent sur un dispositif de refroidissement et de transport situé en dessous et déplacé perpendiculairement à l'axe du récipient de façon à se solidifier ou à se gélifier sur ledit dispositif, l'évacuation étant assurée par un dispositif de démarrage placé à l'intérieur du récipient et installée dans une position relative fixe par rapport à la paroi du récipient, caractérisé en ce que le dispositif de démarrage se compose d'une paroi de retenue (14) s'appliquant contre la moitié inférieure de la paroi (la) du récipient et qui se prolonge, à son extrémité supérieure, dans une paroi réceptrice (13) inclinée en oblique vers le haut par rapport à l'horizontale (I-I) et recouvrant la zone située en arrière de la paroi de retenue, en considérant le sens de rotation (34) du récipient (1), et en ce que l'introduction de la matière dans le récipient est effectuée dans la zone située audessus de la paroi réceptrice.

2. Appareillage selon la revendication 1, caractérisé en ce que la paroi de retenue (14) fait un angle aigu avec une tangente à la paroi (1a) du récipient passant par un point d'intersection avec un prolongement imaginaire de la paroi de retenue.

3. Appareillage selon la revendication 1, caractérisé en ce que la paroi réceptrice (13) est une plaque plane ayant une largeur qui est inférieure au rayon du récipient (1a).

4. Appareillage selon les revendications 1 et 2, caractérisé en ce que la paroi réceptrice (13) est plus large que le rayon du récipient (1) et constitue la délimitation supérieure d'un corps (12) monté de façon pivotante sur l'axe (15, 15') du récipient et sur lequel est également disposée la paroi de retenue (14).

5. Appareillage selon la revendication 4, caractérisé en ce que le corps est un corps creux (12), dans lequel il est prévu des dispositifs de chauffage (39) pour le chauffage de la paroi réceptrice (13).

6. Appareillage selon la revendication 4, caractérisé en ce que le corps (12) est agencé sous la forme d'un corps creux parallélépipédique ayant une section droite de forme triangulaire, et en ce que la paroi réceptrice (13) se prolonge dans une paroi de décharge (14') constituant la paroi de retenue (14) ou disposée en avant de celle-ci et qui forme un côté du parallélépipède.

7. Appareillage selon la revendication 4, caractérisé en ce que la paroi de retenue (14) est montée de façon déplaçable sur le corps (12).

8. Appareillage selon la revendication 7, caractérisé en ce que la paroi de retenue (14) est guidée sur des bras de fixation (24) disposés sur le côté du corps (12) et qui peuvent pivoter à l'extérieur du récipient (1).

9. Appareillage selon la revendication 8, caractérisé en ce que les bras de fixation (24) sont fixés sur des manchons (28) qui sont disposés de façon pivotante sur l'axe (15) du récipient (1).

10. Appareillage selon la revendication 1, caractérisé en ce qu'il est prévu comme dispositif de refroidissement une bande de refroidissement (9) déplaçable perpendiculairement à l'axe (15, 15') du récipient (1).

11. Appareillage selon la revendication 1, caractérisé en ce que l'introduction des matières fluides, de préférence à température élevée, est effectuée par l'intermédiaire d'un tube (37) disposé parallèlement à l'axe de récipient (15, 15'), pouvant être chauffé et qui est pourvu d'orifices de sortie dirigés vers le bas.

12. Appareillage selon la revendication 1, caractérisé en ce que le tube (37) est disposé audessus de la paroi réceptrice (13).

13. Appareillage selon la revendication 1, caractérisé en ce que le récipient (1) est entouré par une hotte de chauffage (32) dans une zone de sa moitié supérieure.

14. Appareillage selon la revendication 1, caractérisé en ce qu'il est prévu dans la zone périphérique du récipient (1) placée en avant de la paroi de retenue (14), en considérant le sens de rotation (34), une palette de refoulement (35) qui s'applique extérieurement contre le récipient et dans sa direction longitudinale.

15. Appareillage selon les revendications 13 et 14, caractérisé en ce que la palette de refoulement (35) est disposée à l'extrémité inférieure, en considérant le sens de rotation (34), de la hotte de chauffage (32).

16. Appareillage selon les revendications 1 à 15, caractérisé en ce que le corps (12) et la paroi de retenue (14) sont maintenus de façon amovible dans le récipient (1).

Fig. 1

0 166 200

Fig. 2

Fig. 3

Fig. 4

Fig. 5

2